(19) Europäisches Patentamt
European Patent Office
Office européen des brevets

(11) Numéro de publication: **0 297 000**
**A2**

(12) **DEMANDE DE BREVET EUROPEEN**

(21) Numéro de dépôt: **88420209.4**

(22) Date de dépôt: **21.06.88**

(51) Int. Cl.⁴: **C 07 F 7/08**
A 01 N 47/36

(30) Priorité: **25.06.87 FR 8709177**
**11.03.88 FR 8803413**

(43) Date de publication de la demande:
**28.12.88 Bulletin 88/52**

(84) Etats contractants désignés:
**AT BE CH DE ES FR GB GR IT LI LU NL SE**

(71) Demandeur: **RHONE-POULENC AGROCHIMIE**
**14-20, rue Pierre Baizet**
**F-69009 Lyon (FR)**

(72) Inventeur: **Borrod, Guy**
**38 Bis rue des Granges**
**F-69005 Lyon France (FR)**

**Gadras, Alain**
**Résidence La Clairière 39 Rue Louis Bouquet**
**F-69009 Lyon France (FR)**

(74) Mandataire: **Ranguis, Patrick Frédéric et al**
**RHONE POULENC AGROCHIMIE Service DPI B.P. 9163**
**F-69263 Lyon Cédex 09 (FR)**

(54) **Herbicides de type sulfonylurée leur préparation, les compositions les contenant et leur utilisation.**

(57) Herbicides de formule (I) :
$L-SO_2-NH-CO-NR_6-A$
dans laquelle :
L correspond à l'un des groupes de formule L-1 à L-6 indiqués ci-aprés,
A correspond au groupe de formule (II) indiqué ci-aprés,

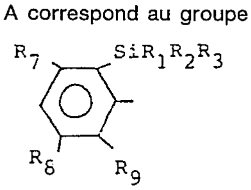
L-1

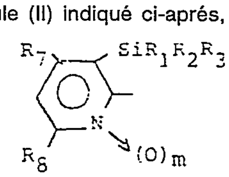
L-2

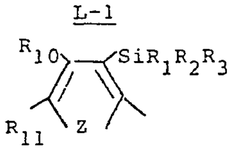
L-3

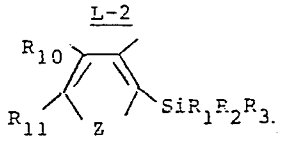
L-4

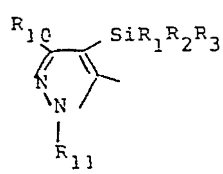
L-5

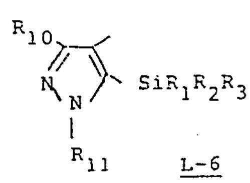
L-6

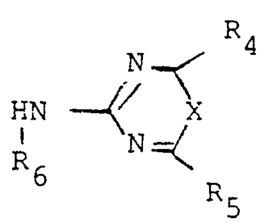
(II)

EP 0 297 000 A2

$R_1$, $R_2$, $R_3$, identiques ou différents, représentent un radical $C_1$-$C_4$ alkyle ou $C_7$-$C_{11}$ aralkyle, notamment benzyle ;

$R_7$, $R_8$, $R_9$, identiques ou différents, présentent unatome d'hydrogène ou d'halogène ou un radical $C_1$-$C_4$ alkyle éventuellement substitué par un ou plusieurs atomes d'halogène ou radicaux $C_1$-$C_4$ alkoxy ou $C_1$-$C_4$ alkylthio, $C_3$-$C_6$ cycloalkyle éventuellement substitué par un ou plusieurs atomes d'halogène ou radicaux $C_1$-$C_4$ alkoxy ou $C_1$-$C_4$ alkylthio, $C_1$-$C_4$ alkoxy ou $C_1$-$C_4$ alkylthio éventuellement substitués par un ou plusieurs atomes d'halogène ou radicaux $C_1$-$C_4$ alkoxy ou $C_1$-$C_4$ alkylthio, $R_{13}$ S(O)n-, n étant un nombre entier égal à 1 ou 2, $R_{13}$ étant un radical $C_1$-$C_4$ alkyle éventuellement substitué par un ou plusieurs atomes d'halogène ou radicaux $C_1$-$C_4$ alkoxy ou $C_1$-$C_4$ alkylthio, $COOR_{14}$, $R_{14}$ étant un atome d'hydrogène, un radical $C_1$-$C_4$ alkyle ou $C_3$-$C_6$ cycloalkyle éventuellement substitués par un ou plusieurs atomes d'halogène ou radicaux $C_1$-$C_4$ alkoxy ou $C_1$-$C_4$ alkylthio, $C_3$-$C_6$ alcényle éventuellement substitué par un ou plusieurs atomes d'halogène,

$R_{10}$, $R_{11}$, identiques ou différents ont la même signification que $R_7$ à l'exception de l'atome d'halogène.

m correspond à 0 ou 1.

Z est l'atome d'oxygène ou de soufre ou le groupe $=N-R_{12}$.

$R_{12}$ est un radical $C_1$-$C_6$ alkyle, $C_6$-$C_{10}$ aryle, $C_7$-$C_{11}$ aralkyle, de préférence méthyle.

X est un radical trivalent , -CH= ou -N=, de préférence -N =.

$R_4$, $R_5$, identiques ou différents, représentent un radical $C_1$-$C_4$ alkyle (de préférence méthyle), $C_1$-$C_4$ alcoxy (de préférence méthoxy), $C_1$-$C_4$ alkylthio (de préférence méthylthio), $C_1$-$C_4$ halogénoalkyle (de préférence trifluorométhyle), $C_1$-$C_4$ halogénoalcoxy (de préférence di ou trifluorométhoxy), $C_1$-$C_4$ halogénoalkylthio (de préférence trifluorométhylthio), $C_2$-$C_6$ alcoxyalkyle (de préférence méthoxyméthyle), $C_2$-$C_6$ alcoxyalcoxy (de préférence méthoxyméthoxy), $C_1$-$C_4$ alkylamino, di ($C_1$-$C_4$ alkyl) amino, un atome d'halogène (de préférence le chlore)

$R_6$ représente l'atome d'hydrogène ou un radical $C_1$-$C_4$ alkyle (de préférence méthyle), avantageusement $R_6$ est l'atome d'hydrogène, et les sels acceptables en agriculture de ces composés.

**Description**

## HERBICIDES DE TYPE SULFONYLUREE, LEUR PREPARATION, LES COMPOSITIONS LES CONTENANT ET LEUR UTILISATION

La présente invention concerne de nouvelles sulfonylurées siliciées à activité herbicide ainsi que les compositions les contenant, leurs procédés de préparation et leur utilisation.

De nombreux documents antérieurs dont on peut citer EP-A- 0030139, EP-A- 0209230, EP-A- 0212779 mentionnent des composés de type sulfonylurées à titre d'herbicides.

Un but de l'invention est de fournir des composés présentant une activité herbicide.

Un autre but de l'invention est de fournir des composés présentant une activité herbicide sélective vis à vis notamment des céréales, du mais, des betteraves, du tournesol, du riz, du soja, du cotonnier, du colza.

Ces buts sont atteints partiellement ou totalement au moyen des composés de l'invention.

Les nouvelles sulfonylurées selon l'invention ont pour formule la formule (I):

$L-SO_2-NH-CO-NR_6-A$

dans laquelle :

L correspond à l'un des groupes de formule L-1 à L-6 indiqués ci-aprés.

A correspond au groupe de formule (II) indiqué ci-aprés.

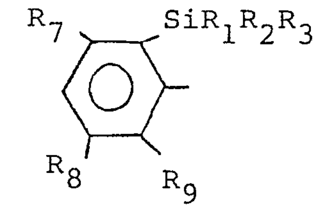

L-1

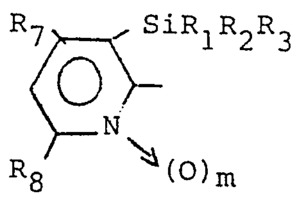

L-2

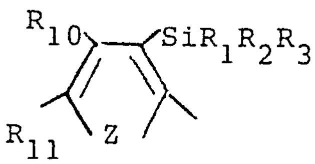

L-3

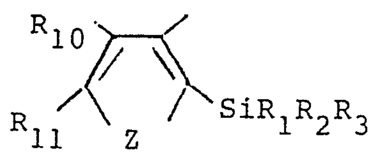

L-4

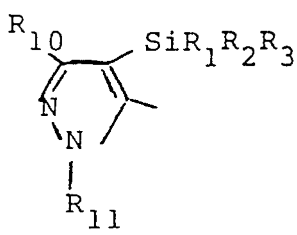

L-5

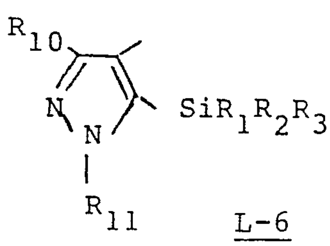

L-6

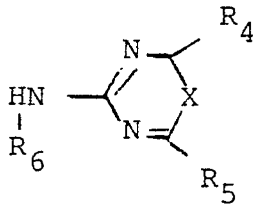

(II)

$R_1$, $R_2$, $R_3$, identiques ou différents, représentent un radical $C_1$-$C_4$ alkyle ou $C_7$-$C_{11}$ aralkyle, notamment benzyle;

$R_7$, $R_8$, $R_9$, identiques ou différents, représentent un atome d'hydrogène ou d'halogène ou un radical $C_1$-$C_4$ alkyle éventuellement substitué par un ou plusieurs atomes d'halogène ou radicaux $C_1$-$C_4$ alkoxy ou $C_1$-$C_4$ alkylthio, $C_3$-$C_6$ cycloalkyle éventuellement substitué par un ou plusieurs atomes d'halogène ou radicaux $C_1$-$C_4$ alkoxy ou $C_1$-$C_4$ alkylthio, $C_1$-$C_4$ alkoxy ou $C_1$-$C_4$ alkylthio éventuellement substitués par un ou

plusieurs atomes d'halogène ou radicaux $C_1$-$C_4$ alkoxy ou $C_1$-$C_4$ alkylthio, $R_{13}$ S(O)n-, n étant un nombre entier égal à 1 ou 2, $R_{13}$ étant un radical $C_1$-$C_4$ alkyle éventuellement substitué par un ou plusieurs atomes d'halogène ou radicaux $C_1$-$C_4$ alkoxy ou $C_1$-$C_4$ alkylthio, $COOR_{14}$, $R_{14}$ étant un atome d'hydrogène, un radical $C_1$-$C_4$ alkyle ou $C_3$-$C_6$ cycloalkyle éventuellement substitués par un ou plusieurs atomes d'halogène ou radicaux $C_1$-$C_4$ alkoxy ou $C_1$-$C_4$ alkylthio, $C_3$-$C_6$ alcényle éventuellement substitué par un ou plusieurs atomes d'halogène,

$R_{10}$, $R_{11}$, identiques ou différents ont la même signification que $R_7$ à l'exception de l'atome d'halogène.

m correspond à 0 ou 1.

Z est l'atome d'oxygène ou de soufre ou le groupe $=N-R_{12}$.

$R_{12}$ est un radical $C_1$-$C_6$ alkyle, $C_6$-$C_{10}$ aryle, $C_7$-$C_{11}$ aralkyle, de préférence méthyle.

X est un radical trivalent , -CH= ou -N=, de préférence -N =.

$R_4$, $R_5$, identiques ou différents, représentent un radical $C_1$-$C_4$ alkyle (de préférence méthyle), $C_1$-$C_4$ alcoxy (de préférence méthoxy), $C_1$-$C_4$ alkylthio (de préférence méthylthio), $C_1$-$C_4$ halogénoalkyle (de préférence trifluorométhyle), $C_1$-$C_4$ halogénoalcoxy (de préférence di ou trifluorométhoxy), $C_1$-$C_4$ halogénoalkylthio (de préférence trifluorométhylthio), $C_2$-$C_6$ alcoxyalkyle (de préférence méthoxyméthyle), $C_2$-$C_6$ alcoxyalcoxy (de préférence méthoxyméthoxy), $C_1$-$C_4$ alkylamino, di ($C_1$-$C_4$ alkyl) amino, un atome d'halogène (de préférence le chlore)

$R_6$ représente l'atome d'hydrogène ou un radical $C_1$-$C_4$ alkyle (de préférence méthyle), avantageusement $R_6$ est l'atome d'hydrogène.

L'invention comprend également les sels acceptables en agriculture de ces composés. Ces sels acceptables sont bien connus de l'homme de l'art, notamment ceux formés avec les bases minérales : soude, potasse, alkyl ammonium.

Selon une première variante avantageuse de la présente invention L correspond au groupe L-1.

Selon une deuxième variante avantageuse de l'invention, on choisira pour leurs propriétés herbicides, les composés de formule (I) dans laquelle $R_1$, $R_2$, $R_3$ sont le radical méthyle.

Selon une troisième variante avantageuse, prise ou non en combinaison avec l'une ou plusieurs des précédentes, $R_4$, $R_5$ identiques ou différents sont un atome d'halogène (de préférence l'atome de chlore), ou un radical $C_1$-$C_4$ alkyle (de préférence méthyle) ou un radical $C_1$-$C_4$ alcoxy (de préférence méthoxy), ou un radical $C_1$-$C_4$ halogénoalkoxy (de préférence difluorméthoxy), $C_1$-$C_4$ alkylthio, $R_{13}SO_2$, $R_{13}$ étant un radical $C_1$-$C_4$ alkyle.

Selon une quatrième variante avantageuse prise ou non en combinaison avec l'une ou plusieurs des précédentes $R_7$, $R_8$, $R_9$ sont choisis parmi les atomes d'halogène ou les atomes d'hydrogéne ou les radicaux $C_1$-$C_4$ alkoxy et de préférence $R_7$, $R_8$, $R_9$ correspondent à l'atome d'hydrogène.

Selon une cinquième variante avantageuse prise ou non en combinaison avec l'une ou plusieurs des précédentes $R_{10}$, $R_{11}$ sont choisis parmi les atomes d'hydrogéne ou les radicaux $C_1$-$C_4$ alkoxy et de préférence $R_{10}$, $R_{11}$ correspondent à l'atome d'hydrogène.

Dans le présent exposé, les diverses formules (I) et suivantes sont réunies sur une même page qui doit être considérée comme faisant partie intégrante de la description de l'invention et non pas seulement comme des dessins explicatifs.

Les sulfonylurées siliciées de formule (I) peuvent être obtenues par action d'une aminopyrimidine ou d'une aminotriazine de formule (II) sur un sulfonylisocyanate de formule (III) L-$SO_2$-NCO, de préférence en quantité stoechiométrique, dans un solvant inerte tel que chloroforme, acétonitrile, toluène, xylène, chlorobenzène, à une température allant de 20 à 100°.

Les sulfonylisocyanates de formule (III) peuvent être obtenus par action du phosgène sur les sulfonamides de formule (IV) L-$SO_2$-$NH_2$, de préférence en excés de phosgène (1.5 à 15 moles), en présence d'isocyanate d'alkyle (de préférence de butyle) dans une proportion allant de 10 à 100 % de la stoéchiométrie et en présence d'une quantité catalytique d'une amine tertiaire (par exemple le diaza-1,4 bicyclo-2,2,2 octane) dans un solvant inerte à point d'ébullition élevé tel que : xylène, chlorobenzène, dichlorobenzène, tétraline ; la réaction s'effectue à des températures généralement comprises entre 120 et 200°C.

Les sulfonamides de formule (IV), dans le cas où $R_7$, $R_8$, $R_9$ sont différents de l'atome d'halogène, peuvent être obtenues par réaction d'un composé de formule (V) L-$SiR_1R_2R_3$ avec le chlorure de sulfamoyle $ClSO_2NH_2$ en présence de trichlorure d'aluminium comme c'est décrit par exemple dans Journal of Chemical Research (s), 1982, P 16-17, P Babin et coll.

Les composés de formule (V) qui sont des ortho di-(trialkylsilane) aryle peuvent être préparés par réaction du composé de formule (VI) R-Hal, dans laquelle R a l'une des significations du groupe L mis à part que le groupement $SiR_1R_2R_3$ est remplacé par le radical Hal, Hal étant un atome de brome ou de chlore, avec du chlorure de triméthylsilane en présence de magnésium comme c'est décrit par exemple dans Journal of Organometallic Chemistry 84 (1975) p 165-175. Bourgeois et coll.

Les composés de formule (II) et (VI) sont obtenus de manière connue. Pour les composés de formule (II), on se référera par exemple au document EP-A-0209230, col 45 et 46.

Les sulfonylurées siliciées de formule (I) peuvent également être obtenues par réaction d'un pyrimidinyl- ou triazinyl- carbamate d'aryle de formule (XII) Ph-O-CO-A, dans laquelle Ph est un noyau aryle, de préférence phényle, sur un sulfonamide de formule (IV), de préférence en quantité stoechiométrique, en présence d'une amine tertiaire (par exemple le diaza-1,8 bicyclo (5,4,0) undécène -7) dans un solvant inerte tel que chloroforme, acétonitrile, acétone, tétrahydrofuranne ou dioxanne à une température allant de 20 à 100°C.

Les carbamates d'aryle de formule (XII) peuvent être obtenus par action d'un chloroformiate d'aryle, de préférence de phényle, sur une amine de formule (II) en présence d'une amine telle que la pyridine dans un solvant polaire aprotique tel que le tétrahydrofuranne à température ambiante de préférence.

Les sulfonamides de formule (IV) peuvent également être obtenus à partir des N-terbutyl sulfonamides (VII) L-$SO_2$-NH-C$(CH_3)_3$ par traitement en milieu acide tels l'acide chlorydrique dans le méthanol ou l'acide trifluoroacétique à température ambiante.

Les composés de formule (VII) peuvent être obtenus par action d'un organolithien, de préférence le n-butylithium, sur le sulfonamide de formule (VIII) Q-$SO_2$-NH-C$(CH_3)_3$, dans laquelle Q a la même signification que L sinon que le groupement $SiR_1R_2R_3$ est remplacé par l'atome d'hydrogène, dans un solvant éthéré de -78°C à 20°C selon un procédé analogue à celui décrit dans Journal of Organic Chemistry, 36 (1971) p 1843-1845, J.G. Lombardino. L'intermédiaire dilithié formé étant traité par le chlorure de triméthylsilyle pendant 1 à 5 h de -30°C à 20°C pour conduire à (VII).

Les sulfonamides de formules (VIII) peuvent être préparés à partie des chlorures de sulfonyle (IX) Q-$SO_2$-Cl et de la terbutylamine selon les méthodes décrites dans "The sulfonamides" H.K. Lewisand Co, LONDON, 1950, F. Hawking and J.S. Lawrence.

Les chlorures de sulfonyle (IX) peuvent être obtenus, soit par oxydation d'un thiol ou d'un sulfure de formule (XI) Q-SH ou Q-S-$R_{15}$, $R_{15}$ étant un groupement $C_1$-$C_6$ alkyle, $C_6$-$C_{10}$ aryle, $C_7$-$C_{11}$ aralkyle, par le chlore en présence d'eau dans un solvant tel l'acide acétique comme c'est décrit dans Canadian Journal of Chemistry, 54 (1976) p 498-499, R.F. LANGLER, soit à partir d'une amine de formule (X) Q-$NH_2$ par diazotation avec du nitrite de sodium dans l'acide chlorydrique suivi par une réaction du sel de diazonium formé avec du dioxyde de soufre en présence de chlorure cuivrique dans l'acide acétique comme c'est décrit dans Journal of Organic Chemistry, 25 (1960) p 1824, YALE, SOWINSKI. Dans le cas où Q correspond à L-4 et $R_{10}$, $R_{11}$ correspondent à l'atome d'hydrogéne, le composé de formule (IX) peut être préparé à partir del'acide sulfonique comme c'est décrit par A.ARCORIA et coll dans Journal of Organic Chemistry, 39 (1974) pp 1689-1691.

Dans les diverses formules (II) à (XII), les divers substituants ont mêmes significations que dans la formule (I).

Les divers composés de formules (III) à (V) sont des produits nouveaux qui font également partie de l'invention.

L'invention concerne également l'utilisation à titre d'herbicide des composés de formule (I).

L'utilisation des composés de formule (I) est la plupart du temps sous forme de composition herbicide comportant un ou plusieurs supports acceptables en agriculture.

En effet pour leur emploi pratique, les composés selon l'invention sont rarement utilisés seuls. Le plus souvent ces composés font partie de compositions. Ces compositions, utilisables comme agents herbicides, contiennent comme matière active un composé selon l'invention tel que décrit précédemment en mélange avec les supports solides ou liquides, acceptables en agriculture et les agents tensio-actifs également acceptables en agriculture.En particulier sont utilisables les supports inertes et usuels et les agents tensio-actifs usuels. Ces compositions font également partie de l'invention.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, etc... . Plus généralement les composés utilisés dans l'invention peuvent être combinées à tous les additifs solides ou liquides correspondant aux techniques habituelles de la mise en formulation.

Les doses d'emploi des composés utilisés dans l'invention peuvent varier dans de larges limites, notamment selon la nature des mauvaises herbes à éliminer et le degré d'infestation habituel des cultures pour ces mauvaises herbes.

D'une façon générale, les compositions selon l'invention contiennent habituellement de 0,05 à 95 % environ (en poids) d'un composé selon l'invention, un ou plusieurs supports solides ou liquides et, éventuellement, un ou plusieurs agents tensioactifs.

Par le terme "support", dans le présent exposé, on désigne une matière organique ou minérale, naturelle ou synthétique, avec laquelle le composé est combiné pour faciliter son application sur la plante, sur des graines ou sur le sol. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau ; alcools, notamment le butanol etc..).

L'agent tensioactif peut être un agent émulsionnant, dispersant ou mouillant de type ionique ou non ionique ou un mélange de tels agents tensioactifs. On peut citer par exemple des sels d'acides polyacryliques, des sels d'acides lignosulfoniques, des sels d'acides phénolsulfoniques ou naphtalènesulfoniques, des polycondensats d'oxide d'éthylène sur des alcools gras ou sur des acides gras ou sur des amines grasses, des phénols substitués (notamment des alkylphénols ou des arylphénols), sels d'esters d'acides sulfosucciniques, des dérivés de la taurine (notamment des alkyltaurates), des esters phosphoriques d'alcools ou de phénols polyoxyéthylés, des esters d'acides gras et de polyols, les dérivés à fonction sulfates, sulfonates et phosphates des composés précédents. La présence d'au moins un agent tensioactif est généralement indispensable lorsque le composé et/ou le support inerte ne sont pas solubles dans l'eau et que l'agent vecteur de l'application est l'eau.

Pour leur application, les composés se trouvent donc généralement sous forme de compositions.Ces compositions selon l'invention sont elles-mêmes sous des formes assez diverses, solides ou liquides.

Comme formes de compositions solides, on peut citer les poudres pour poudrage (à teneur en composé pouvant aller jusqu'à 100 %) et les granulés, notamment ceux obtenus par extrusion, par compactage, par imprégnation d'un support granulé, par granulation à partir d'une poudre (la teneur en composé dans ces granulés étant entre 0,5 et 80 % pour ces derniers cas).

Comme formes de compositions liquides ou destinées à constituer des compositions liquides lors de l'application, on peut citer les suspensions concentrées.

Les suspensions concentrées, qui sont applicables en pulvérisation, sont préparées de manière à obtenir un produit fluide stable ne se déposant pas (broyage fin) et elles contiennent habituellement de 10 à 75 % de composé, de 0,5 à 30 % d'agents tensioactifs, de 0,1 à 30 % d'agents thixotropes, de 0 à 30 % d'additifs appropriés, comme des anti-mousses, des inhibiteurs de corrosion, des stabilisants, des agents de pénétration et des adhésifs et, comme support, de l'eau ou un liquide organique dans lequel la matière active est peu soluble ou non soluble : certaines matières solides organiques ou des sels minéraux peuvent être dissous dans le support pour aider à empêcher la sédimentation ou comme antigels pour l'eau.

A titre d'exemple, voici une composition de suspension concentrée :

Exemple :
- composé 500 g
- phosphate de tristyrylphénol polyéthoxylé 50 g
- alkylphénol polyéthoxylé 50 g
- polycarboxylate de sodium 20 g
- éthylène glycol 50 g
- huile organopolysiloxanique (antimousse) 1 g
- polysaccharide 1,5 g
- eau 316,5 g

Les poudres mouillables (ou poudre à pulvériser) sont habituellement préparées de manière qu'elles contiennent 20 à 95 % de composé, et elles contiennent habituellement, en plus du support solide, de 0 à 15 % d'un agent mouillant, de 3 à 10 % d'un agent dispersant, et, quant c'est nécessaire, de 0 à 15 % d'un ou plusieurs stabilisants et/ou autres additifs, comme des agents de pénétration, des adhésifs, ou des agents antimottants, colorants, etc..

A titre d'exemple, voici diverses compositions de poudres mouillables :

Exemple :
- composé 50 %
- lignosulfonate de calcium (défloculant) 5 %
- isopropylnaphtalène sulfonate (agent mouillant anionique) 1 %
- silice antimottante 5 %
- kaolin (charge) 39 %

Exemple :
- composé 80 %
- alkylnaphtalène sulfonate de sodium 2 %
- lignosulfonate de sodium 2 %
- silice antimottante 3 %
- kaolin (charge) 13 %

Exemple :
- composé 50 %
- alkylnaphtalène sulfonate de sodium 2 %
- méthyl cellulose de faible viscosité 2 %
- terre de diatomées 46 %

Exemple :
- composé 90 %
- dioctylsulfosuccinate de sodium 0,2 %
- silice synthétique 9,8 %

Exemple :
- composé 400 g %
- lignosulfonate de sodium 50 g
- dibutylnaphtalène sulfonate de sodium 10 g
- silice 540 g

Exemple :
- composé 250 g
- isooctylphénoxy-polyoxyéthylène-éthanol 25 g

- mélange équipondéral de craie de Champagne et d'hydroxyéthylcellulose 17 g
- aluminosilicate de sodium 543 g
- kieselguhr 165 g

Exemple :

- composé 100 g
- mélange de sels de sodium de sulfates d'acides gras saturés 30 g
- produit de condensation d'acide naphtalène sulfonique et de formaldéhyde 50 g
- kaolin 820 g

Pour obtenir ces poudres à pulvériser ou poudres mouillables, on mélange intimement les matières actives dans des mélangeurs appropriés avec les substances additionnelles ou on imprègne le composé sur la charge poreuse et on broie avec des moulins ou autres broyeurs appropriés. On obtient par là des poudres à pulvériser dont la mouillabilité et la mise en suspension sont avantageuses ; on peut les mettre en suspension avec de l'eau à toute concentration désirée.

Les granulés "autodispersibles" (en langue anglaise "dry flowable" ; il s'agit plus exactement de granulés facilement dispersibles dans l'eau) ont une composition sensiblement voisine de celle des poudres mouillables. Ils peuvent être préparés par granulation de formulations décrites pour les poudres mouillables, soit par voie humide (mise en contact du composé finement divisé avec la charge inerte et avec un peu d'eau, par exemple 1 à 20%, ou de solution aqueuse de dispersant ou de liant, puis séchage et tamisage), soit par voie sèche (compactage puis broyage et tamisage).

A titre d'exemple, voici une formulation de granulé autodispersible

Exemple :

- composé 800 g
- alkylnaphtalène sulfonate de sodium 20 g
- méthylène bis naphtalène sulfonate de sodium 80 g
- kaolin 100 g

A la place des poudres mouillables, on peut réaliser des pâtes. Les conditions et modalités de réalisation et d'utilisation de ces pâtes sont semblables à celles des poudres mouillables ou poudres à pulvériser.

Comme cela a déjà été dit, les dispersions et émulsions aqueuses, par exemple des compositions obtenues en diluant à l'aide d'eau une poudre mouillable selon l'invention, sont comprises dans le cadre général des compositions utilisables dans la présente invention.

Toutes ces dispersions ou émulsions aqueuses ou bouillies sont applicables aux cultures à désherber par tout moyen convenable, principalement par pulvérisation, à des doses qui sont généralement de l'ordre de 50 à 500 litres de bouillie à l'hectare.

Les granulés destinés à être disposés sur le sol sont habituellement préparés de manière qu'ils aient des dimensions comprises entre 0,1 et 2 mm et ils peuvent être fabriqués par agglomération ou imprégnation. De préférence, les granulés contiennent 1 à 95 % de composé et 0 à 50 % d'additifs comme des stabilisants, des agents de modifications à libération lente, des liants et des solvants.

Selon un exemple de composition de granulé, on utilise les constituants suivants

Exemple :

- composé 50 g
- propylène glycol 25 g
- huile de lin bouillie 50 g
- argile (granulométrie : 0,3 à 0,8 mm) 910 g

La présente invention concerne aussi un procédé de désherbage qui consiste à appliquer aux plantes devant être détruites une quantité efficace d'un composé de formule (I).

Les produits et compositions selon l'invention s'appliquent commodément sur la végétation et notamment sur les mauvaises herbes à éliminer lorsque celles-ci présentent un feuillage vert.

Pour les composés adaptés à cette application, on peut aussi utiliser un procédé de désherbage qui consiste à appliquer une quantité efficace d'un composé de formule (I) sur des zones ou terrains où l'on veut empêcher la pousse ou le développement de plantes n'ayant pas encore poussé (application de préémergence). On peut également opérer de manière à ce que la culture soit semée avant ou après traitement.

La dose d'application de matière active est généralement comprise entre 1 et 2 000 g/ha, de préférence entre 5 et 1 000 g/ha (généralement 50 à 500 litres de bouillie à l'hectare).

Les exemples suivants donnés à titre non limitatif illustrent l'invention et montrent comment elle peut être mise en pratique:

Exemple n°1

Préparation du N-terbutyl-triéthylsilyl-2 benzene sulfonamide (produit inclus dans la formule VII).

Dans un ballon tricol de 1000ml équipé de deux ampoules de coulée et parcouru par un courant d'argon, on introduit 30g (0,14 mole) de N-terbutyl benzene sulfonamide et 500 ml de tetrahydrofuranne.
200 ml de n-butyllithium 1,6 N (0,32 mole) sont ensuite introduits dans une ampoule de coulée. On refroidit la solution de tetrahydrofuranne à - 30° C puis on coule à cette température le n-butyllithium. La solution, limpide au départ, prend une coloration jaune puis orangée en fin de coulée. On laisse revenir la température à 0° C, on maintient le milieu 1/2 h à 0° C puis on refroidit à - 20° C. On introduit 50 ml (0,3 mole) de chlorure de triethylsilyle dans la seconde ampoule que l'on coule goutte à goutte à -20° C sur le sel précedemment formé. On laisse revenir à température ambiante puis on hydrolyse le milieu avec 30 ml d'une solution d'acide chlorydrique 6N. La solution est lavée jusqu'à neutralité avec 300 ml d'une solution saturée en chlorure d'ammonium, séchée sur sulfate de magnésium puis concentrée. On recueille 38 g d'un solide pâteux que l'on recristallise dans 70 ml d'heptane. On obtient le N-terbutyl triethylsilyl-2 benzène sulfonamide sous forme d'une poudre blanche fondant à 98,6° C.
Masse recueillie : 35g. Rendement = 76%.

## TABLEAU (I)

Composés répondant à la formule (VII) dans laquelle $R_8$, $R_{10}$, $R_{11}$ est l'atome d'hydrogène et préparés selon l'exemple 1

| ex | Groupe | $SiR_1R_2R_3$ | $R_7$ | $R_9$ | Z | m | Point de fusion en °C |
|---|---|---|---|---|---|---|---|
| 1 | L-1 | $SiEt_3$ | H | H | - | - | 98,6 |
| 2 | L-1 | $SiMe_3$ | H | H | - | - | 100,7 |
| 3 | L-1 | $SiMe_3$ | Cl | H | - | - | 152 |
| 4 | L-1 | $SiMe_3$ | H | $CF_3$ | - | - | 144 |
| 5 | L-1 | $SiMe_3$ | H | OMe | - | - | 152 |
| 6 | L-1 | $SiMe_3$ | H | Cl | - | - | 158,3 |
| 7 | L-1 | $SiMe_3$ | H | F | - | - | 139,5 |
| 8 | L-1 | $SiMe_3$ | H | $SO_2Me$ | - | - | 136,5 |
| 9 | L-2 | $SiMe_3$ | H | - | - | 0 | 124,4 |
| 10 | L-4 | $SiMe_3$ | - | - | S | - | 120,4 |

Exemple n° 11.

Préparation du triéthylsilyl-2 benzene sulfonamide (produit inclus dans la formule IV).

Dans un ballon monocol de 250 ml, 16,5g (50 mMoles) de N-terbutyl -triethylsilyl-2 benzene sulfonamide sont dissous dans 80 ml d'acide trifluoroacétique. Le mélange est maintenu 2 h sous agitation à température ambiante.

L'acide trifluoroacétique est ensuite éliminé sous vide et le résidu obtenu est repris avec 60 ml d'heptane.

Le triethylsilyl-2 benzene sulfonamide est obtenu sous forme de cristaux blancs fondant à 85,6° C.
Masse recueillie : 11,9g Rendement = 88%.

TABLEAU (II)

Composés répondant à la formule (IV) dans laquelle $R_8$, $R_{10}$, $R_{11}$ est l'atome d'hydrogène et préparés selon l'exemple 11

| ex | Groupe | $SiR_1R_2R_3$ | $R_7$ | $R_9$ | Z | m | Point de fusion en °C |
|---|---|---|---|---|---|---|---|
| 11 | L-1 | $SiEt_3$ | H | H | - | - | 85,6 |
| 12 | L-1 | $SiMe_3$ | H | H | - | - | 160,7 |
| 13 | L-1 | $SiMe_3$ | Cl | H | - | - | 162 |
| 14 | L-1 | $SiMe_3$ | H | $CF_3$ | - | - | 122 |
| 15 | L-1 | $SiMe_3$ | H | OMe | - | - | 82 |
| 16 | L-1 | $SiMe_3$ | H | Cl | - | - | 80,8 |
| 17 | L-1 | $SiMe_3$ | H | F | - | - | 89 |
| 18 | L-1 | $SiMe_3$ | H | SMe | - | - | 144 |
| 19 | L-1 | $SiMe_3$ | H | $SO_2Me$ | - | - | 137,1 |
| 20 | L-2 | $SiMe_3$ | H | - | - | 0 | 127,1 |
| 21 | L-2 | $SiMe_3$ | H | - | - | 1 | 231,7 |
| 22 | L-4 | $SiMe_3$ | - | - | S | - | 124,3 |

Exemple 23.

Préparation du N-(diméthoxy-4,6 pyrimidinyl-2) aminocarbonyl triethylsilyl-2 benzene sulfonamide. (produit inclus dans la formule I).

Dans un ballon de 100ml, on introduit 1,97g (7,26 mMoles) de triethylsilyl-2 benzene sulfonamide, 2g (7,26 mMoles) de N-(dimethoxy-4,6 pyrimidin-1,3 yl-2) carbamate de phenyl dans 35ml d'acetonitrile sec. Sur la solution précédente, on coule à température ambiante 1,1g (7,26 mMoles) de diaza-1,8 bicyclo (5,4,0) undécène-7 dilué dans 8ml d'acétonitrile.

La température s'élève de 3 à 4°C. Le milieu est maintenu 4h sous agitation à température ambiante.

On coule ensuite 6 ml d'une solution d'acide chlorydrique à 10%.

Un précipité blanc apparait rapidement. Celui-ci est filtré, lavé avec 15ml d'éther diisopropylique puis séché sous vide.

On obtient le N-(dimethoxy -4,6 pyrimidinyl-2) aminocarbonyl triethylsilyl-2 benzene sulfonamide sous forme d'une poudre blanche fondant à 136,5°C.

Masse recueillie : 2,3g Rendement = 70%.

## TABLEAU (III)

Composés répondant à la formule I dans laquelle $R_6$, $R_7$, $R_{10}$, $R_{11}$ est l'atome d'hydrogène et préparés selon l'exemple 23

| Ex | Groupe | $SiR_1R_2R_3$ | $R_8$ | $R_9$ | Z | m | $R_4$ | $R_5$ | X | Point de fusion en °C |
|---|---|---|---|---|---|---|---|---|---|---|
| 23 | L-1 | $SiEt_3$ | H | H | - | - | OMe | OMe | CH | 136,5 |
| 24 | L-1 | $SiMe_3$ | H | H | - | - | OMe | OMe | CH | 169,9 |
| 25 | L-1 | $SiMe_3$ | H | H | - | - | Me | Me | CH | 190,4 |
| 26 | L-1 | $SiMe_3$ | H | H | - | - | OMe | Me | N | 166,1 |
| 27 | L-1 | $SiMe_3$ | H | H | - | - | OMe | Me | CH | 168,1 |
| 28 | L-1 | $SiMe_3$ | H | H | - | - | OMe | OMe | N | 174,4 |
| 29 | L-1 | $SiEt_3$ | H | H | - | - | OMe | Me | N | 169,2 |
| 30 | L-1 | $SiEt_3$ | H | H | - | - | Me | Me | CH | 192,6 |
| 31 | L-1 | $SiEt_3$ | H | H | - | - | OMe | Me | CH | 156,3 |
| 32 | L-1 | $SiMe_3$ | H | Cl | - | - | OMe | OMe | CH | 179 |
| 33 | L-1 | $SiMe_3$ | H | Cl | - | - | Me | Me | CH | 198 |
| 34 | L-1 | $SiMe_3$ | H | Cl | - | - | OMe | Me | N | 200 |
| 35 | L-1 | $SiMe_3$ | H | Cl | - | - | OMe | OMe | N | 202 |
| 36 | L-1 | $SiMe_3$ | H | $CF_3$ | - | - | Me | Me | CH | 210 |
| 37 | L-1 | $SiMe_3$ | H | $CF_3$ | - | - | OMe | OMe | CH | 164 |
| 38 | L-1 | $SiMe_3$ | H | $CF_3$ | - | - | OMe | OMe | N | 160 |
| 39 | L-1 | $SiMe_3$ | H | $CF_3$ | - | - | OMe | Me | N | 177 |
| 40 | L-1 | $SiMe_3$ | H | $CF_3$ | - | - | OMe | Me | CH | 164 |
| 41 | L-1 | $SiMe_3$ | H | F | - | - | Me | Me | CH | 184 |
| 42 | L-1 | $SiMe_3$ | H | F | - | - | OMe | OMe | CH | 157 |
| 43 | L-1 | $SiMe_3$ | H | F | - | - | OMe | Me | CH | 188 |
| 44 | L-1 | $SiMe_3$ | H | F | - | - | OMe | Me | N | 188,5 |
| 45 | L-1 | $SiMe_3$ | H | F | - | - | OMe | OMe | N | 179 |
| 46 | L-1 | $SiMe_3$ | H | F | - | - | OMe | Cl | CH | 172 |
| 47 | L-1 | $SiMe_3$ | H | OMe | - | - | OMe | OMe | CH | 130,1 |
| 48 | L-1 | $SiMe_3$ | H | SMe | - | - | Me | Me | CH | 157,3 |

| | | | | | | | | | | |
|---|---|---|---|---|---|---|---|---|---|---|
| 49 | L-1 | $SiMe_3$ | H | SMe | - | - | OMe | OMe | CH | 134,3 |
| 50 | L-1 | $SiMe_3$ | H | SMe | - | - | OMe | Me | N | 156,5 |
| 51 | L-1 | $SiMe_3$ | H | $SO_2Me$ | - | - | OMe | OMe | CH | 109,8 |
| 52 | L-1 | $SiMe_3$ | H | $SO_2Me$ | - | - | Me | Me | CH | 195,8 |
| 53 | L-1 | $SiMe_3$ | H | $SO_2Me$ | - | - | OMe | OMe | N | 169,8 |
| 54 | L-1 | $SiMe_3$ | H | $SO_2Me$ | - | - | OMe | Me | N | 175,5 |
| 55 | L-2 | $SiMe_3$ | H | - | - | 0 | Me | Me | CH | 179 |
| 56 | L-2 | $SiMe_3$ | H | - | - | 0 | OMe | OMe | CH | 165 |
| 57 | L-2 | $SiMe_3$ | H | - | - | 0 | OMe | Me | CH | 181 |
| 58 | L-2 | $SiMe_3$ | H | - | - | 0 | OMe | Me | N | 160 |
| 59 | L-2 | $SiMe_3$ | OMe | - | - | 0 | OMe | OMe | CH | 156,1 |
| 60 | L-2 | $SiMe_3$ | H | - | - | 1 | OMe | Me | CH | 180,3 |
| 61 | L-2 | $SiMe_3$ | H | - | - | 1 | Me | Me | CH | |
| 62 | L-2 | $SiMe_3$ | | - | - | 1 | OMe | OMe | N | 159,4 |
| 63 | L-2 | $SiMe_3$ | | - | - | 1 | OMe | OMe | CH | 150,7 |
| 64 | L-4 | $SiMe_3$ | - | - | S | - | OMe | OMe | CH | 166,9 |
| 65 | L-4 | $SiMe_3$ | - | - | S | - | Me | Me | CH | 190,2 |
| 66 | L-4 | $SiMe_3$ | - | - | S | - | OMe | Me | N | 156,3 |
| 67 | L-4 | $SiMe_3$ | - | - | S | - | OMe | OMe | N | 155,3 |
| 68 | L-4 | $SiMe_3$ | - | - | S | - | OMe | Cl | CH | 167,1 |

Exemple A - Application herbicide, en prélevée des espèces végétales

Dans des pots de 7 x 7 x 8 cm remplis de terre agricole légère, on sème un nombre de graines déterminé en fonction de l'espèce végétale et de la grosseur de la graine.

Les pots sont traités par pulvérisation de bouillie en quantité correspondant à une dose volumique d'application de 500 l/ha et contenant la matière active à la concentration désirée.

Le traitement avec la bouillie est donc effectué sur des graines non recouvertes de terre (on utilise le terme de bouillie pour désigner, en général, les compositions diluées à l'eau, telles qu'on les applique sur les végétaux).

La bouillie utilisée pour le traitement est une solution ou suspension de la matière active dans un mélange acétone/eau en proportions 50/50, en présence de 0,05 % en poids de Cemulsol NP 10 (agent tensio-actif) constitué d'alkylphénol polyéthoxylé, notamment de nonylphénol polyéthoxylé) et 0,04 % en poids de tween 20 (agent tensio-actif constitué d'un oléate de dérivé polyoxyéthyléné du sorbitol).

Dans le cas d'une suspension, celle-ci est obtenue en mélangeant et broyant les ingrédients dans un microniseur de façon à obtenir une grosseur moyenne de particules inférieure à 40 microns.

Différentes concentrations en matière active de la bouillie ont été utilisées qui correspondaient à différentes doses de matière active appliquée. Les résultats sont présentés pour les doses d'application suivantes:
Exemples n° 38, 39, à 250 g/ha
Exemple n° 34 à 500 g/ha
Exemples n° 27, 28, 32, 33, 35, 36, 55, 56, 57, 58 à 1000 g/ha.

Après traitement, on recouvre les graines d'une couche de terre d'environ 3 mm d'épaisseur.

Les pots sont alors placés dans des bacs destinés à recevoir l'eau d'arrosage, en subirrigation, et maintenus pendant 24 jours à température ambiante sous 70 % d'humidité relative.

Au bout de 24 jours, on compte le nombre de plantes vivantes dans les pots traités par la bouillie contenant la matière active à tester et le nombre de plantes vivantes dans un pot témoin traité selon les mêmes conditions, mais au moyen d'une bouillie ne contenant pas de matière active. On détermine ainsi le

pourcentage de destruction des plantes traitées par rapport au témoin non traité (première ligne de résultats). Un pourcentage de destruction égal à 100 % indique qu'il y a eu destruction complète de l'espèce végétale considérée et un pourcentage de 0 % indique que le nombre de plantes vivantes dans le pot traité est identique à celui dans le pot témoin. On détermine également le pourcentage de réduction de taille des espèces non détruites ou partiellement détruites (seconde ligne de résultats).

Les résultats obtenus sont présentés après l'exemple B. Exemple B : Application herbicide, en postlevée des espèces végétales.

Dans des pots de 7 x 7 x 8 cm remplis de terre agricole légère, on sème un nombre de graines déterminé en fonction de l'espèce végétale et de la grosseur de la graine.

On recouvre ensuite les graines d'une couche de terre d'environ 3 mm d'épaisseur et on laisse germer la graine jusqu'à ce qu'elle donne naissance à une plantule au stade convenable.

Le stade de traitement pour les graminées est le stade "deuxième feuille en formation". Le stade de traitement pour les dicotylédones, est le stade "cotylédons étalés, première feuille vraie en développement".

Les pots sont alors traités par pulvérisation de bouillie en quantité correspondant à une dose volumique d'application de 500 l/ha et contenant la matière active à la concentration désirée.

La bouillie a été préparée de la même manière qu'à l'exemple A.

Différentes concentrations en matière active de la bouillie ont été utilisées qui correspondaient à différentes doses de matière active appliquée. Les résultats sont présentés pour les doses d'application suivantes :
Exemples n° 38, 39, à 250 g/ha
Exemple n° 34 à 500 g/ha
Exemples n° 27, 28, 32, 33, 35, 36, 55, 56, 57, 58 à 1000 g/ha

Les pots traités sont ensuite placés dans des bacs destinés à recevoir l'eau d'arrosage, en subirrigation, et maintenus pendant 24 jours à température ambiante sous 70 % d'humidité relative.

Au bout de 24 jours, on compte le nombre de plantes vivantes dans les pots traités par la bouillie contenant la matière active à tester et le nombre de plantes vivantes dans un pot témoin traité selon les mêmes conditions, mais au moyen d'une bouillie ne contenant pas de matière active.

On détermine ainsi le pourcentage de destruction des plantes traitées par rapport au témoin non traité (première ligne de résultats). Un pourcentage de destruction égal à 100 % indique qu'il y a eu destruction complète de l'espèce végétale considérée et un pourcentage de 0 % indique que le nombre de plantes vivantes dans le pot traité est identique à celui dans le pot témoin. On détermine également le pourcentage de réduction de taille des espèces non détruites ou partiellement détruites (seconde ligne de résultats).

Les espèces végétales utilisées dans ces exemples A et B sont

| Abreviations | Nom latin | Nom français |
|---|---|---|
| AVE | Avena fatua | Folle avoine |
| ECH | Echinochloa crusgalli | Panisse |
| LOL | Lolium multiflorum | Ray-grass |
| CYP | Cyperus esculentus | Cyperus |
| CEN | Centaurea cyanus | Centaurée |
| IPO | Ipomea purpurea | Liseron pourpre |
| SIN | Sinapis alba | Moutarde |
| ABU | Abutilon theophrasti | Abutilon |
| DAU | Daucus carota | Carotte |

Les résultats obtenus en prélevée (mode d'application de l'exemple A) sont les suivants :

| EX | ECH | LOL | CYP | CEN | IPO | SIN | ABU | DAU |
|---|---|---|---|---|---|---|---|---|
| 27 | 50 | 100 | 30 | 50 | 0 | 90 | 0 | 0 |
| | 50 | | 30 | 70 | 50 | | 70 | 50 |
| 28 | | 0 | | 0 | 0 | 100 | 0 | 0 |
| | | 30 | | 30 | 20 | | 20 | 50 |
| 32 | 30 | 80 | 100 | 0 | 20 | 98 | 0 | 30 |
| | 30 | | | 10 | 30 | | 30 | 40 |
| 34 | 100 | 100 | 100 | 30 | 0 | 80 | 0 | 0 |
| | | | | 70 | 0 | | 50 | 40 |
| 35 | 100 | 100 | 100 | | | 100 | 100 | 90 |
| | | | | | | | | |
| 36 | 100 | 100 | 70 | | 0 | 30 | | |
| | | | 20 | | 40 | 50 | | |
| 38 | 30 | 98 | 80 | | 0 | 80 | 30 | |
| | 60 | 0 | 0 | | 60 | 0 | 20 | |
| 39 | 100 | 100 | 80 | | 0 | 80 | 0 | |
| | | | | | 70 | | 30 | |
| 55 | 10 | 0 | 30 | | | 30 | 20 | |
| | 70 | 70 | 0 | | | 70 | 20 | |
| 56 | 80 | 100 | 100 | | 0 | 98 | 30 | |
| | | | | | 70 | | 30 | |
| 57 | 80 | 98 | 80 | | 80 | 40 | 80 | |
| | | | | | | 80 | | |
| 58 | 50 | 100 | 30 | | 80 | 100 | 30 | |
| | 80 | | 30 | | | | 0 | |
| | | | | | | | | |

Les résultats obtenus en postlevée (mode d'application de l'exemple B) sont les suivants :

| EX | ECH | LOL | CYP | CEN | IPO | SIN | ABU | DAU |
|---|---|---|---|---|---|---|---|---|
| 27 | 0 | 95 | 0 | 0 | 0 | 100 | 0 | 50 |
| | 60 | | 30 | 30 | 50 | | 50 | 50 |
| 28 | | 30 | | | 0 | 100 | 0 | 0 |
| | | 50 | | | 50 | | 30 | 30 |
| 32 | 80 | 0 | 0 | 0 | 0 | 100 | 80 | 100 |
| | | 50 | 30 | 50 | 40 | | | |
| 33 | 20 | | | | 0 | 100 | 0 | |
| | 80 | | | | 20 | | 20 | |
| 34 | 100 | 95 | 30 | 0 | 0 | 100 | 80 | 50 |
| | | | 50 | 30 | 70 | | | 50 |
| 35 | 80 | 100 | 0 | | 100 | 100 | 100 | 80 |
| | | | 50 | | | | | |
| 36 | 30 | 10 | 0 | 0 | 20 | 100 | 20 | |
| | 80 | 70 | 40 | 0 | 60 | | 50 | |
| 38 | 30 | 10 | 0 | | 100 | 100 | 0 | |
| | 70 | 60 | 60 | | | | 30 | |
| 39 | 20 | 50 | 0 | | 100 | 100 | 20 | |
| | 70 | 70 | 30 | | | | 60 | |
| 55 | | | | | 30 | 80 | | |
| | | | | | 30 | | | |
| 56 | 100 | 30 | 0 | | 100 | 100 | 20 | |
| | | 70 | 60 | | | | 40 | |
| 57 | 80 | 80 | 0 | | 70 | 100 | 0 | |
| | | | 20 | | 70 | | 30 | |
| 58 | 90 | 100 | | | 100 | 100 | | |
| | | | | | | | | |
| | | | | | | | | |

Les essais réalisés montrent donc clairement les propriétés avantageuses des composés selon l'invention, aussi bien pour des traitements en prélevée des cultures, que pour les traitements en postlevée, et cela aussi bien sur des adventices monocotylédones (graminées) que sur des dicotylédones.

**Revendications**

1) Composés à groupe sulfonylurée utilisables notamment comme herbicides, caractérisés en ce qu'ils ont pour formule la formule (I):

$L\text{-}SO_2\text{-}NH\text{-}CO\text{-}NR_6\text{-}A$

dans laquelle:

L correspond à l'un des groupes de formule L-1 à L-6 indiqués ci-aprés,

A correspond au groupe de formule (II) indiqué ci-aprés,

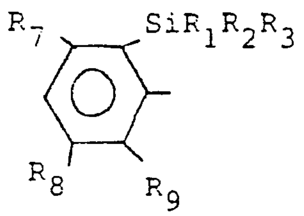

L-1

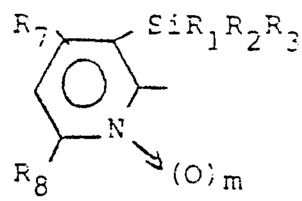

L-2

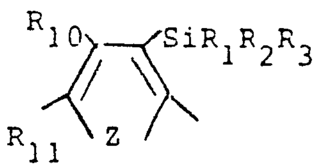

L-3

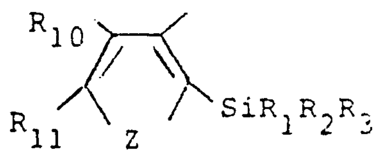

L-4

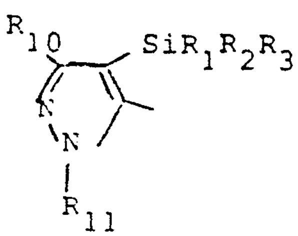

L-5

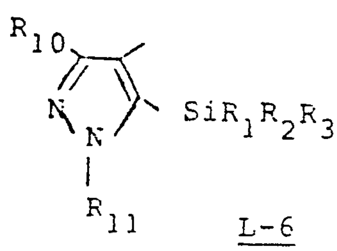

L-6

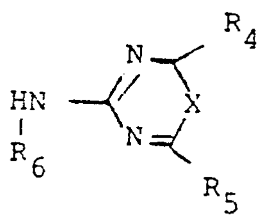

(II)

$R_1$, $R_2$, $R_3$, identiques ou différents, représentent un radical $C_1$-$C_4$ alkyle ou $C_7$-$C_{11}$ aralkyle, notamment benzyle;

$R_7$, $R_8$, $R_9$, identiques ou différents, représentent un atome d'hydrogène ou d'halogène ou un radical $C_1$-$C_4$ alkyle éventuellement substitué par un ou plusieurs atomes d'halogène ou radicaux $C_1$-$C_4$ alkoxy ou $C_1$-$C_4$ alkylthio, $C_3$-$C_6$ cycloalkyle éventuellement substitué par un ou plusieurs atomes d'halogène ou radicaux $C_1$-$C_4$ alkoxy ou $C_1$-$C_4$ alkylthio, $C_1$-$C_4$ alkoxy ou $C_1$-$C_4$ alkylthio éventuellement substitués par un ou plusierus atomes d'halogène ou radicaux $C_1$-$C_4$ alkoxy ou $C_1$-$C_4$ alkylthio, $R_{13}$ S(O)n-, n étant un nombre entier égal à 1 ou 2, $R_{13}$ étant un radical $C_1$-$C_4$ alkyle éventuellement substitué par un ou plusieurs atomes d'halogène ou radicaux $C_1$-$C_4$ alkoxy ou $C_1$-$C_4$ alkylthio, $COOR_{14}$, $R_{14}$ étant un atome d'hydrogène, un radical $C_1$-$C_4$ alkyle ou $C_3$-$C_6$ cycloalkyle éventuellement substitués par un ou plusieurs atomes d'halogène ou radicaux $C_1$-$C_4$ alkoxy ou $C_1$-$C_4$ alkylthio, $C_3$-$C_6$ alcényle éventuellement substitué par un ou plusieurs atomes d'halogène,

$R_{10}$, $R_{11}$, identiques ou différents ont la même signification que $R_7$ à l'exception de l'atome d'halogène.

m correspond à 0 ou 1.
Z est l'atome d'oxygène ou de soufre ou le groupe $=N-R_{12}$.
$R_{12}$ est un radical $C_1$-$C_6$ alkyle, $C_6$-$C_{10}$ aryle, $C_7$-$C_{11}$ aralkyle, de préférence méthyle.
X est un radical trivalent, -CH= ou -N=, de préférence -N=.
$R_4$, $R_5$, identiques ou différents, représentent un radical $C_1$-$C_4$ alkyle (de préférence méthyle), $C_1$-$C_4$ alcoxy (de préférence méthoxy), $C_1$-$C_4$ alkylthio (de préférence méthylthio), $C_1$-$C_4$ halogénoalkyle (de préférence trifluorométhyle), $C_1$-$C_4$ halogénoalcoxy (de préférence di ou trifluorométhoxy), $C_1$-$C_4$ halogénoalkylthio (de préférence trifluorométhylthio), $C_2$-$C_6$ alcoxyalkyle (de préférence méthoxyméthyle), $C_2$-$C_6$ alcoxyalcoxy (de préférence méthoxyméthoxy), $C_1$-$C_4$ alkylamino, di ($C_1$-$C_4$ alkyl) amino, un atome d'halogène (de préférence le chlore)
$R_6$ représente l'atome d'hydrogène ou un radical $C_1$-$C_4$ alkyle (de préférence méthyle), avantageusement $R_6$ est l'atome d'hydrogène, et les sels acceptables en agriculture de ces composés.

2) Composés selon la revendication 1, caractérisés en ce que le groupe L correspond à L-1.

3) Composés selon la revendication 1 ou 2, caractérisés en ce que $R_1$, $R_2$, $R_3$ sont le radical méthyle.

4) Composés selon l'une des revendications précédentes caractérisés en ce que $R_4$, $R_5$ identiques ou différents sont un atome d'halogène (de préférence l'atome de chlore), ou un radical $C_1$-$C_4$ alkyle (de préférence méthyle) ou un radical $C_1$-$C_4$ alcoxy (de préférence méthoxy), ou un radical $C_1$-$C_4$ halogénoalkoxy (de préférence difluorométhoxy).

5) Composés selon l'une des revendications précédentes, caractérisés en ce que $R_7$ $R_8$, $R_9$ sont choisis parmi les atomes d'halogène ou les atomes d'hydrogéne ou les radicaux $C_1$-$C_4$ alkoxy et de préférence $R_7$, $R_8$, $R_9$ correspondent à l'atome d'hydrogène.

6) Composés selon l'une des revendications précédentes, caractérisés en ce que $R_{10}$, $R_{11}$ sont choisis parmi les atomes d'hydrogéne ou les radicaux $C_1$-$C_4$ alkoxy et de préférence $R_{10}$, $R_{11}$ correspondent à l'atome d'hydrogène.

7) Composés caractérisés en ce qu'ils ont l'une des formules (III) à (V) présentées dans la description et dans lesquelles les divers substituants ont les significations données dans l'une des revendications 1 à 6.

8) Procédé de préparation de composés de formule (I) selon l'une des revendications 1 à 6, caractérisé en ce qu'ils sont obtenus par action d'une aminopyrimidine ou d'une aminotriazine de formule (II) sur un sulfonylisocyanate de formule (III) $L-SO_2-NCO$, de préférence en quantité stoechiométrique, dans un solvant inerte tel que chloroforme, acétonitrile, toluène, xylène, chlorobenzène, à une température allant de 20 à 100°.

9) Procédé de préparation de composés de formule (I) selon l'une des revendications 1 à 6, caractérisé en ce qu'ils sont obtenus par action d'un pyrimidinyl- ou triazinyl- carbamate d'aryle de formule (XII) Ph-O-CO-A, dans laquelle Ph est un noyau $C_6$-$C_{10}$ aryle, de préférence phényle, sur un sulfonamide de formule (IV) $L-SO_2-NH_2$, de préférence en quantité stoechiométrique, en présence d'une amine tertiaire (par exemple le diaza-1,8 bicyclo (5,4,0) undécène -7) de préférence dans un solvant inerte tel que chloroforme, acétonitrile, acétone, tétrahydrofuranne ou dioxanne à une température allant de 20 à 100°C.

10) Utilisation des composés selon l'une des revendications 1 à 6 à titre d'herbicides, notamment sous forme de compositions herbicides, contenant comme matière active un composé selon l'une des revendications 1 à 6, cette matière active étant en association avec au moins un support inerte, usuel, acceptable en agriculture.

11) Compositions selon la revendication 10, caractérisées en ce qu'elles contiennent 0,05 à 95 % de matière active.